# FASCICULE DE BREVET EUROPEEN

(11) **EP 1 825 045 B1**
(45) Date de publication et mention de la délivrance du brevet: **26.10.2011**
(21) Numéro de dépôt: 05824411.2
(22) Date de dépôt: 06.12.2005
(51) Int. Cl.: D04H 1/64, D04H 13/00, B32B 5/26, E04B 1/74

(54) **PROCEDE DE FABRICATION D'UN PRODUIT EN LAINE MINERALE COLOREE COMPRENANT UN REVETEMENT DE MEME COULEUR**
VERFAHREN ZUR HERSTELLUNG EINES GEFÄRBTEN MINERALWOLLEPRODUKTS MIT GLEICHFARBIGER BESCHICHTUNG
METHOD FOR PRODUCING A COLOURED MINERAL WOOL PRODUCT COMPRISING THE SAME COLOUR COATING

(30) Priorité: 07.12.2004 FR 0452887
(43) Date de publication de la demande: 29.08.2007
(73) Titulaire: SAINT-GOBAIN ISOVER, 92400 Courbevoie (FR)
(72) Inventeur: CARPANEDO, Olivier, F-71530 Virey Le Grand (FR); JORET, Laurent, F-75015 Paris (FR); ZINZIUS, Roger, F-71640 Givry (FR)
(74) Mandataire: Lucas, Francois
(86) Numéro de dépôt international: PCT/FR2005/051041
(87) Numéro de publication internationale: WO 2006/061540

(56) Documents cités:
- EP-A- 1 418 292
- FR-A- 2 687 604
- US-A- 3 276 928
- US-A- 4 917 750
- US-A1- 2004 151 888
- US-B1- 6 203 646

## Description

L'invention se rapporte au domaine des panneaux à base de fibres minérales, notamment de fibres de verre, comprenant un surfaçage de couleur. Elle s'applique tout particulièrement à la fabrication de produits d'isolation acoustique et/ou thermique tels que par exemple les panneaux roulés pour l'isolation acoustique de haut niveau et de faible épaisseur teintés dans leur masse et revêtus d'un revêtement d'une couleur identique, par exemple de noir.

Les panneaux d'isolation commercialisés à l'heure actuelle sont constitués d'un matelas ou feutre de fibres minérales, telles que des fibres de verre liées par un liant organique. Sur le feutre est le plus souvent collée côté apparent une couche d'un revêtement qui peut avoir plusieurs finalités. Par exemple des effets de parement peuvent être recherchés pour conférer un aspect fini ou pour le moins uniforme au produit fini. Le revêtement peut également avoir pour fonction d'améliorer la tenue mécanique du feutre.

Le choix d'un revêtement peut en outre être guidé par la recherche d'un meilleur confort d'utilisation des panneaux, notamment lors de leur pose. Il est en effet connu que la manipulation de produits à base de fibres de verre peut occasionner une gêne ou une irritation pour la peau ou les yeux de celui qui les manipule et il est par conséquent avantageux que celles-ci puissent être maintenues confinées dans le feutre.

Parmi les revêtements utilisés le plus souvent à l'heure actuelle, on peut citer les films de polychlorure de vinyle, les toiles de fibres de verre qui peuvent être éventuellement peintes, les papiers de type kraft, les films d'aluminium sur papier kraft.

Par exemple, le document EP-A-1418292 décrit un produit d'isolation thermique en laine minérale.

Dans certaines versions dites « confort » de ces panneaux, on cherche à conserver une esthétique générale uniforme du produit et surtout à améliorer la sensation au toucher de ces revêtements de surface, de façon à améliorer encore le confort de l'utilisateur.

Outre que ces revêtements doivent permettre d'obtenir au final un produit facile et confortable à utiliser et remplir tout ou partie des fonctions précédemment décrites, ils doivent également être suffisamment résistants à une contrainte locale telle qu'une pression exercée avec le doigt et avoir de bonnes capacités de résistance au feu.

Pour répondre à cette somme d'impératifs, quelques matériaux non tissés peuvent être proposés comme revêtement d'un feutre de laine minérale : les polypropylènes et les toiles de fibres de verre de faible grammage. Les non-tissés de polypropylènes doivent être appliqués sur le matelas de laine minérale après toute étape de traitement thermique, notamment de séchage en étuve, car ils ne peuvent pas supporter les températures de traitement. Les toiles de verre utilisées à l'heure actuelle procurent une sensation moins agréable au toucher et ne sont pas toujours assez résistantes à une pression locale.

D'un autre coté, dans certaines utilisations de panneaux de fibres de verre tels que des panneaux roulés, il est quelquefois mélangé un pigment coloré à la laine minérale lors de sa formation, tel qu'illustré par la suite. On peut ainsi obtenir un panneau teinté dont la couleur est immédiatement associée par l'utilisateur à une fonction bien précise. Un tel code de couleur est par exemple illustré par le produit de référence Soniroll® commercialisé par la société Saint-Gobain Isover et se présentant sous forme de panneaux roulés semi-rigides de laine de verre teintée dans sa masse par un pigment de carbone noir et revêtue d'une toile de fibres de verre préalablement peinte en noir. La couleur noire est identifiée par le consommateur à l'utilisation du produit comme isolant acoustique des murs et des plafonds. La toile de verre est relativement dense (grammage fort de l'ordre de 60 g/m²) et pose en outre des problèmes d'effritement au déroulement.

On a maintenant découvert un procédé de fabrication simple d'un panneau de fibres minérales, ledit panneau comprenant un pigment coloré et au moins l'une de ses faces étant revêtue d'un revêtement non tissé d'un matériau essentiellement noir. Ledit procédé se **caractérise en ce que** le revêtement sous la forme d'un voile à base de polyester de grammage approprié est introduit dans l'installation de fabrication des panneaux sans traitement de coloration préalable et sans imprégnation ou introduction de colle supplémentaire pour son adhésion au matelas de fibre.

Plus précisément, l'invention se rapporte à un procédé de fabrication d'un produit en laine minérale, telle que la laine de verre, ladite laine étant colorée et comprenant un revêtement de même couleur, dans lequel la laine minérale est recueillie pour former sur des moyens convoyeurs un matelas de fibres après aspersion par un liant polymérisable sous l'effet de la chaleur et après mélange avec des pigments colorés, puis introduite dans une enceinte de réticulation, ledit procédé se **caractérisant en ce que** le revêtement est un voile de polyester et en ce que ledit voile de polyester est mis au contact du matelas avant introduction dans l'enceinte, sans adjonction de colorant et sans imprégnation ou introduction de colle supplémentaire pour son adhésion au matelas de fibres.

De préférence, selon ledit procédé de fabrication, les moyens convoyeurs sont perméables aux gaz et sont montés sur des moyens d'aspiration desdits gaz.

Selon un premier mode de réalisation, le voile de polyester est introduit sur les moyens convoyeurs avant la dépose des fibres sur lesdits moyens convoyeurs.

Selon un deuxième mode de réalisation, le voile de polyester est introduit au dessus ou en dessous du matelas de fibre, immédiatement avant l'introduction dudit matelas dans l'enceinte de réticulation.

L'invention se rapporte également au produit en laine minérale colorée comprenant un revêtement de même couleur tel qu'un panneau roulé surfacé pouvant être obtenu par un procédé tel que précédemment décrit.

D'autres détails, caractéristiques ou avantages sont illustrés par l'exemple non limitatif qui suit dans lequel un mode de réalisation de l'invention est décrit, en référence à la figure annexée ou est représentée schématiquement une ligne de production de panneaux isolants à base de laine de verre.

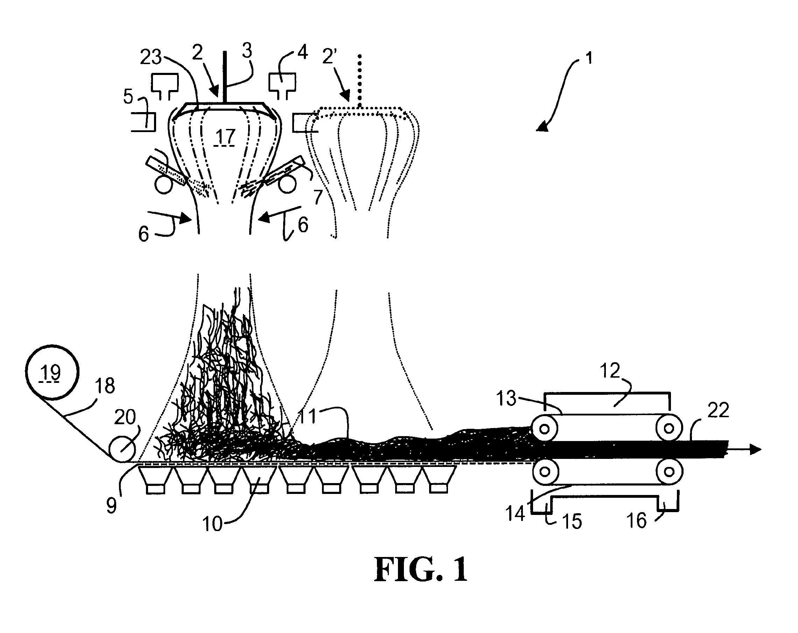

Une telle ligne comporte une unité de fibrage 1 en soi parfaitement connue, par exemple conforme au procédé de fibrage par centrifugation interne dont des exemples de réalisation sont décrits dans les demandes EP 0 406 107 ou EP 0 461 995. L'unité de fibrage comporte une hotte (non représentée sur la figure 1) surmontée d'un ou plusieurs centrifugeurs 2, 2'. Chaque centrifugeur comprend un panier (non représenté sur la figure 1) pour la récupération du verre fondu et une pièce 23 en forme d'assiette dont la paroi périphérique est munie d'un grand nombre d'orifices. En fonctionnement, le verre fondu, amené en un filet 3 depuis un four de fusion (non représenté) et d'abord récupéré dans le panier du centrifugeur, s'échappe par les orifices de l'assiette 23 sous la forme d'une multitude de filaments entraînés en rotation. Le centrifugeur 2 est par ailleurs entouré par un brûleur annulaire 4 qui crée à la périphérie de la paroi du centrifugeur un courant gazeux à grande vitesse et à température suffisamment élevée pour étirer les filaments de verre en fibres sous la forme d'un tore 17. Le fibrage selon ce procédé est intégral et produit 100% de fibres utiles. Le procédé garantit en outre des fibres longues et souples.

Des moyens de chauffage 5 par exemple du type inducteurs servent à maintenir le verre et le centrifugeur à la bonne température. Le tore 17 est refermé par un courant gazeux d'air introduit sous pression, schématisé par les flèches 6. Le tore 17 est entouré par un dispositif de pulvérisation de l'encollage contenant le liant en solution aqueuse, dont un seul. élément 7 est représenté sur la figure 1. Un dispositif 21 permet l'introduction par exemple dans le même temps et sensiblement à la même hauteur d'un pigment coloré au coeur de la masse des fibres de verre nouvellement formées. Sans sortir du cadre de l'invention, un même dispositif pourrait être utilisé pour l'introduction du liant et du pigment, par exemple préalablement mélangés.

Le fond de la hotte de fibrage est constitué par un dispositif de réception des fibres comprenant un convoyeur incorporant une bande sans fin 9 perméable aux gaz et à l'eau, sous laquelle sont disposés des caissons d'aspiration 10 des gaz tels que l'air, les fumées et les compositions aqueuses excédentaires issues du processus de fibrage précédemment décrit. Il se forme ainsi sur la bande 9 du convoyeur un matelas 11 de fibres de laine de verre mélangées intimement avec le pigment et le liant. Le matelas 11 est conduit par le convoyeur jusqu'à une enceinte 12 de réticulation. Cette enceinte 12 est habituellement constituée par une chambre fermée comprenant une série de caissons alimentés par des brûleurs en air chaud mis en circulation par des ventilateurs (non représentés sur la figure 1). L'enceinte est traversée par deux convoyeurs complémentaires 13, 14 de transport et de calibrage. Ces convoyeurs 13, 14 sont par exemple mus en rotation par des moteurs placés dans les fosses 15, 16, et constitués selon l'enseignement du brevet FR 2 394 041 par une succession de palettes rigides perforées articulées entre elles.

Tout en assurant le passage des gaz chauds favorisant la prise rapide du liant, les convoyeurs 13, 14 compriment le matelas pour lui donner l'épaisseur souhaitée. A titre d'exemple, pour un panneau roulé, celle-ci est typiquement comprise entre 10 et 150 mm, de préférence entre 20 et 100 mm, la densité de la couche de laine de verre étant par exemple comprise entre 10 et 100 kg/m³, de préférence entre 20 et 80 kg/m³.

Selon l'invention, on introduit sur la bande 9, en amont de la réticulation du matelas de fibres dans l'enceinte 12, un support constitué par un voile de polyester qui constituera le revêtement de surface du produit final obtenu. Dans l'exemple illustré par la figure 1, l'introduction est faite en amont de la dépose du matelas de fibres sur le convoyeur. Le voile de polyester 18 est classiquement dévidé à partir d'un rouleau 19 et plaqué sur la partie supérieure de la bande 9 du convoyeur par l'action d'un rouleau tendeur 20. On dispose ainsi de manière simple et peu coûteuse entre le matelas de fibres néoformé 11 et les caissons d'aspiration 10 le voile de polyester servant de revêtement final. La phase d'aspiration effectuée par les caissons 10 permet classiquement la diminution de l'humidité des fibres et du liant mais également selon l'invention une bonne adhérence des fibres réparties dans la partie inférieure du feutre au voile de polyester, sans utilisation de moyens supplémentaires. En particulier, sous l'effet de l'aspiration, le liant, habituellement utilisé pour la cohésion entres les fibres, imprègne également le voile de polyester 18. Par conséquent aucun ajout supplémentaire de colle n'est nécessaire, ce qui permet une économie sensible dans le coût global du procédé et surtout ne dégrade pas, voire améliore, la réaction au feu du produit final, par exemple au sens des Euroclasses selon la norme NF EN 13501. En particulier, l'imprégnation est améliorée par le fait que le voile de polyester, d'abord confiné sur le convoyeur 9, est plaqué ensuite aux fibres par l'effet de l'aspiration 10 puis finalement comprimé contre celles-ci par les rouleaux à bande du convoyeur 14 avant et pendant la cuisson dans l'enceinte 12.

La cuisson induit l'évaporation de l'eau, la réticulation du liant entre les fibres du matelas mais également une adhérence forte entre le voile de polyester 18 imprégné et le matelas lié et calibré 22. Bien entendu on choisit selon l'invention un voile de polyester connu ou testé pour pouvoir subir sans dégradation substantielle de sa structure et/ou de ses dimensions les températures habituellement utilisées pour ladite réticulation, pendant une durée au moins égale et de préférence supérieure à la durée de passage du voile dans l'enceinte 12. A titre d'exemple, ces températures sont typiquement comprises entre 100 et 250°C, de préférence entre 150 et 220°C. Le voile de polyester utilisé selon l'invention peut en outre avoir préalablement subi un traitement visant à améliorer sa réaction au feu et peut ainsi par exemple comprendre des charges connues pour une fonction d'ignifugation tel que certains oxydes.

Il faut remarquer en outre que l'on utilise selon l'invention un voile de polyester dont le grammage permet la traversée des gaz, de telle façon que la phase d'aspiration de l'air puisse être exécutée sans entraîner des pertes de charge supplémentaires ou trop importantes au niveau des caissons d'aspiration 10 lors de l'accumulation de la masse des fibres. Par des perturbations trop importantes, il est entendu des perturbations susceptibles de gêner le bon déroulement du procédé ou l'organisation optimale des fibres dans le feutre.

Bien qu'il ne soit pas restreint à cet intervalle, le grammage des voiles de polyester utilisés selon l'invention est ainsi typiquement compris entre environ 10 et 50 g/m², de préférence entre environ 15 et 30 g/m² et de manière très préférée entre environ 15 et 20 g/m².

Un des avantages de l'utilisation d'un voile de polyester est donc d'offrir une possibilité d'introduction du voile très en amont dans le procédé de fabrication des panneaux. Un tel procédé apparaît très difficile à mettre en oeuvre sans en perturber fortement le bon fonctionnement, si une toile en fibre de verre classiquement utilisée est introduite à ce stade, en raison de la perte de charge à l'aspiration trop élevée engendrée par cette introduction.

Enfin le procédé tel qu'il vient d'être décrit permet avantageusement, de manière simple et économique, d'utiliser directement un voile de polyester, c'est à dire n'ayant subit aucun traitement initial de coloration ou de teinte pour approvisionner le rouleau 19. Bien qu'il soit admis que pour obtenir le revêtement coloré ou teinté du produit Soniroll^{®} actuel comprenant une toile de fibre de verre noire ou d'un produit équivalent, une étape d'imprégnation de la toile dans un bain encreur est nécessaire, il a maintenant été découvert que le voile de polyester blanc s'imprégnait non seulement de la colle mais également des pigments colorés initialement distribués par le dispositif 21 lors du fibrage. Il a en outre été trouvé que cet effet est particulièrement intense et visible si, comme schématisé sur la figure 1, le voile de polyester est introduit sur la bande 9 du convoyeur avant la réception des fibres sur ledit convoyeur, dans la chronologie du procédé de fabrication du produit. Sans que cela puisse être relié à une quelconque théorie, l'intensité observée de la pigmentation du voile de polyester, liée à une diffusion rapide des particules de pigments au travers du matelas de fibres, pourrait résulter conjointement :
- des interactions entre le liant et le pigment, le liant se chargeant des particules de pigment et favorisant leur migration vers le voile et
- de l'aspiration effectuée par les caissons 10 qui favorise la migration d'une quantité suffisante de liant pour assurer en outre la bonne adhérence du voile sur le feutre.

Contrairement à ce qui est constaté pour une toile de verre, on a par ailleurs constaté qu'aucun problème d'effritement du revêtement n'est observé au déroulement du produit final lorsqu'un voile de polyester selon l'invention est utilisé.

Par exemple, dans le cas où le pigment est constitué par des particules de carbone pour l'obtention d'un aspect noir du panneau final, il a été observé que si un voile de polyester de grammage égal à 17 g/m², un pourcentage poids de 5% de liant et un pourcentage de 1% de carbone dans l'extrait sec par rapport à la masse des fibres est utilisé, une majorité de la surface du voile de polyester sur le panneau fini prenait une teinte sensiblement identique à celle du matelas de fibre de verre constituant le coeur du matériau. Par majorité de la surface, on entend au sens de la présente description au moins 50% de ladite surface. Ce pourcentage pourrait sans sortir du cadre de l'invention être de 70% voire 80% suivant les conditions utilisées lors du procédé de fabrication, par exemple selon la puissance de l'aspiration, le taux ou la quantité de pigments utilisé, la teneur en liant du feutre, le taux de perforation du convoyeur de réception, etc..

La quantité de liant utilisée est en général comprise entre 1 et 10% poids par rapport à la masse des fibres, de préférence entre 2 et 8% poids et de manière très préférée entre 4 et 7% poids. La quantité de pigment utilisée est variable et est généralement un compromis, par exemple déduit de l'homme de l'art par des expériences de routine, entre la résistance au feu et l'intensité de la coloration du revêtement recherchées sur le produit fini.

A titre d'exemple, pour le noir de carbone, de bons résultats en terme de coloration et de réaction au feu selon la norme NF EN 13501 ont été observés lorsque la quantité introduite de pigment correspondait à un pourcentage poids dudit pigment dans l'extrait sec, c'est à dire après séchage, compris entre 0,1 et 5% par rapport à la masse des fibres, de préférence compris entre 0,5 et 1,5 % par rapport à la masse des fibres.

L'encollage utilisé comme liant est par exemple à base de résine formo-phénolique comprenant éventuellement de l'urée, en solution ou dispersion aqueuse d'un extrait sec compris entre 30 et 60% poids.

Dans le mode de réalisation qui précède, illustré par la figure 1, on a décrit un mode de réalisation dans lequel le voile de polyester est introduit dans le procédé en amont de la dépose des fibres de verre sur la bande 9 du convoyeur. On ne sortirait cependant pas du cadre de l'invention si ledit voile 18 était introduit sur la face supérieure ou inférieure du matelas de fibres immédiatement avant son passage dans l'enceinte de réticulation 12, par exemple au niveau de l'entrée du matelas respectivement sur les convoyeurs 13 ou 14. Dans ce cas, l'imprégnation du voile et sa coloration sont assurées essentiellement grâce à la compression exercée par le convoyeur 13 ou 14 sur le matelas de fibre et le voile de polyester lors de la mise en forme de celui-ci. Dans ce mode de réalisation, l'adhérence du voile au matelas, bien que diminuée, reste cependant acceptable et la diminution de la coloration observée est compensée par une réaction au feu améliorée, en raison de la plus faible migration du liant vers le voile.

Sur la figure 1, on a représenté un système de réception et de convoyage des fibres comprenant un système à bande sans fin. Toutefois, le présent procédé peut être également mis en oeuvre par un système limitant la dépression subit par le feutre et comprenant plusieurs zones de réception correspondantes chacune à une ou plusieurs machines de fibrage, chaque zone de réception étant par exemple constituée d'une paire de tambours mus en rotation inverse, selon les principes illustrés par le brevet EP 0 406 107.

## Revendications

1. Procédé de fabrication d'un produit en laine minérale, telle que la laine de verre, ladite laine étant colorée et comprenant un revêtement de même couleur, dans lequel la laine minérale est recueillie pour former sur des moyens convoyeurs un matelas de fibres après aspersion par un liant polymérisable sous l'effet de la chaleur et après mélange avec des pigments colorés, puis introduite dans une enceinte de réticulation, ledit procédé **se caractérisant en ce que** le revêtement est un voile de polyester et **en ce que** ledit voile de polyester est mis au contact du matelas avant introduction dans l'enceinte, sans adjonction de colorant et sans imprégnation ou introduction de colle supplémentaire pour son adhésion au matelas de fibres.

2. Procédé de fabrication selon la revendication 1 dans lequel les moyens convoyeurs sont perméables aux gaz et sont montés sur des moyens d'aspiration desdits gaz.

3. Procédé de fabrication selon la revendication 1 ou 2 dans lequel le voile de polyester est introduit sur les moyens convoyeurs avant la dépose des fibres sur lesdits moyens convoyeurs.

4. Procédé de fabrication selon la revendication 1 ou 2 dans lequel le voile de polyester est introduit au dessus ou en dessous du matelas de fibre, immédiatement avant l'introduction dudit matelas dans l'enceinte de réticulation.

5. Procédé de fabrication selon l'une des revendications précédentes dans lequel le grammage du voile de polyester est compris entre 10 et 50 g/m², de préférence entre 15 et 30 g/m² et de manière très préférée entre 15 et 20 g/m².

6. Procédé de fabrication selon l'une des revendications précédentes dans lequel le pigment utilisé permet une coloration noir du matelas et du voile, par exemple des particules de carbone.

7. Procédé de fabrication selon l'une des revendications précédentes dans lequel la quantité de liant est comprise entre 1 et 10% poids par rapport à la masse des fibres, de préférence entre 2 et 8% poids et de manière très préférée entre 4 et 7% poids.

8. Procédé de fabrication selon l'une des revendications précédentes dans lequel la quantité de pigment la introduite correspond à un pourcentage poids dudit pigment dans l'extrait sec compris entre 0,1 et 5% par rapport à la masse des fibres, de préférence compris entre 0,5 et 1,5 % par rapport à la masse des fibres.

9. Procédé de fabrication selon l'une des revendications 2 à 8 dans lequel la puissance de l'aspiration et/ou la quantité de pigments et/ou la quantité de liant sont choisies pour qu'au moins 50% de la surface du voile de polyester sur le produit fini présente une teinte sensiblement identique au matelas de fibre de verre constituant le coeur du matériau.

10. Produit en laine minérale colorée comprenant un revêtement de même couleur, tel qu'un panneau roulé surfacé, susceptible d'être obtenu par un procédé selon l'une des revendications précédentes.

## Claims

1. A method for producing a mineral wool product, such as glass wool, said wool being dyed and comprising a coating of the same color, in which the mineral wool is gathered to form a fiber pad on conveyor means after spraying by a binder curable under the effect of heat and after blending with colored pigments, then introduced into a crosslinking chamber, said method being **characterized in that** the coating is a polyester fabric and **in that** said polyester fabric is contacted with the pad before introduction into the chamber, without the addition of dye and without impregnation or introduction of additional adhesive for its adhesion to the fiber pad.

2. The production method as claimed in claim 1, in which the conveyor means are permeable to gases and are mounted on means for aspirating said gases.

3. The production method as claimed in either of claims 1 and 2, in which the polyester fabric is introduced on the conveyor means before placing the fibers on said conveyor means.

4. The production method as claimed in either of claims 1 and 2, in which the polyester fabric is introduced above or below the fiber pad, immediately before the introduction of said pad into the crosslinking chamber.

5. The production method as claimed in one of the preceding claims, in which the basis weight of the polyester fabric is between 10 and 50 g/m², preferably between 15 and 30 g/m², and highly preferably between 15 and 20 g/m².

6. The production method as claimed in one of the preceding claims, in which the pigment used is suitable for dyeing the pad and fabric black, for example, made from carbon particles.

7. The production method as claimed in one of the preceding claims, in which the quantity of binder is between 1 and 10 wt% of the fiber mass, preferably between 2 and 8 wt% and highly preferably between 4 and 7 wt%.

8. The production method as claimed in one of the preceding claims, in which the quantity of pigment introduced corresponds to a weight percentage of said pigment in the dry extract of between 0.1 and 5% of the fiber mass, preferably between 0.5 and 1.5% of the fiber mass.

9. The production method as claimed in one of claims 2 to 8, in which the suction capacity and/or the quantity of pigments and/or the quantity of binder are selected so that at least 50% of the surface of the polyester fabric on the finished product has a substantially identical color to the glass fiber pad constituting the core of the material.

10. A colored mineral wool product comprising a coating of the same color, such as a rolled surfaced board, obtainable by a method as claimed in one of the preceding claims.

## Patentansprüche

1. Verfahren zur Herstellung eines Produktes aus Mineralwolle wie etwa Glaswolle, wobei die Wolle gefärbt ist und eine Kaschierung mit einer gleichen Farbe aufweist, bei dem die Mineralwolle nach Besprühen mit einem unter Wärmeeinwirkung polymerisierbaren Bindemittel und nach Mischen mit Farbpigmenten aufgenommen wird, um auf Fördereinrichtungen eine Fasermatte zu bilden, und anschließend in einen Vernetzungsraum eingeführt wird, wobei das Verfahren **dadurch gekennzeichnet ist, dass** es sich bei der Kaschierung um einen Polyesterschleier handelt, sowie dadurch, dass der Polyesterschleier ohne Zusetzen von Farbstoff und ohne Imprägnieren oder Einbringen von zusätzlichem Klebstoff für seine Anhaftung an der Fasermatte mit der Matte in Kontakt gebracht wird, bevor er in den Raum eingeführt wird.

2. Herstellungsverfahren nach Anspruch 1, bei dem die Fördereinrichtungen für Gase durchlässig sind und auf Einrichtungen zum Ansaugen der Gase montiert sind.

3. Herstellungsverfahren nach Anspruch 1 oder 2, bei dem der Polyesterschleier vor dem Ablegen der Fasern auf den Fördereinrichtungen auf die Fördereinrichtungen eingebracht wird.

4. Herstellungsverfahren nach Anspruch 1 oder 2, bei dem der Polyesterschleier unmittelbar vor dem Einführen der Matte in den Vernetzungsraum über oder unter der Fasermatte eingebracht wird.

5. Herstellungsverfahren nach einem der vorherigen Ansprüche, bei dem das Flächengewicht des Polyesterschleiers zwischen 10 und 50 g/m², bevorzugt zwischen 15 und 30 g/m², und insbesondere bevorzugt zwischen 15 und 20 g/m² beträgt.

6. Herstellungsverfahren nach einem der vorherigen Ansprüche, bei dem das verwendete Pigment eine Schwarzfärbung der Matte und des Schleiers ermöglicht, beispielsweise Kohlenstoffteilchen.

7. Herstellungsverfahren nach einem der vorherigen Ansprüche, bei dem die Menge von Bindemittel zwischen 1 und 10 Gew.-% bezogen auf die Masse der Fasern, bevorzugt zwischen 2 und 8 Gew.-%, und insbesondere bevorzugt zwischen 4 und 7 Gew.-% beträgt.

8. Herstellungsverfahren nach einem der vorherigen Ansprüche, bei dem die Menge von eingebrachtem Pigment einem Gewichtsprozentanteil des Pigmentes im Trockenextrakt von zwischen 0,1 und 5% bezogen auf die Masse der Fasern, bevorzugt zwischen 0,5 und 1,5% bezogen auf die Masse der Fasern entspricht.

9. Herstellungsverfahren nach einem der Ansprüche 2 bis 8, bei dem die Leistung der Ansaugung und/oder die Menge von Pigmenten und/oder die Menge von Bindemittel so gewählt werden, dass mindestens 50% der Oberfläche des Polyesterschleiers auf dem fertigen Produkt eine Tönung aufweist, die mit der den Kern des Materials darstellenden Glasfasermatte im Wesentlichen identisch ist.

10. Produkt aus gefärbter Mineralwolle, das eine Kaschierung mit einer gleichen Farbe aufweist, wie etwa eine mit einer Oberflächenkaschierung versehene, gerollte Platte, die mit einem Verfahren nach einem der vorherigen Ansprüche herstellbar ist.
